# EUROPÄISCHE PATENTANMELDUNG

(11) **EP 3 345 786 A1**
(43) Veröffentlichungstag der Anmeldung: **11.07.2018**
(21) Anmeldenummer: 17202668.4
(22) Anmeldetag: 21.11.2017
(51) Int. Cl.: B60P 1/44, B62B 3/04, B62B 5/00, B62D 53/00

(54) **ROUTENZUGANHÄNGER FÜR BODENROLLER**

(30) Priorität: 29.12.2016 DE 102016125863; 25.01.2017 DE 102017101368
(71) Anmelder: LR Intralogistik GmbH, 84109 Wörth a. d. Isar (DE)
(72) Erfinder: GANGHOFER, Florian, 84036 Landshut (DE); BERGHAMMER, Fritz, 84028 Landshut (DE)
(74) Vertreter: Patentship Patentanwaltsgesellschaft mbH

(57) **Zusammenfassung**

Die Erfindung betrifft einen Routenzuganhänger (1) für einen Routenzug mit einem Tragrahmen (2), der an einem Fahrwerk über eine Hubvorrichtung gegenüber einer Fahrbahnoberfläche (FB) anhebbar und absenkbar abgestützt ist, wobei der Tragrahmen (2) eine seitliche Ladeöffnung (6) zur Aufnahme von in die Ladeöffnung (6) quer zur Längsrichtung des Routenzuganhängers (1) ein- und ausschiebbaren Bodenrollern (B1-B4) aufweist. Der anhebbare und absenkbare Tragrahmen (2) ist mit Tragflächen (20a, 20b, 20c; 20d, 20e, 20f) zur Aufnahme mindestens einer Bodenroller-Tragpalette (15) versehen, wobei die Bodenroller-Tragpalette (15) mit mehreren Auffahrflächen (16a, 16b, 16c, 16d) zur Aufnahme mehrerer Bodenroller (B1-B4) versehen ist und wobei die Bodenroller-Tragpalette (15) zwischen den Auffahrflächen (16a, 16b, 16c, 16d) mit nach unten offenen Einfahrkanälen (17a, 17b) für Radarme eines Hubwagens (18) oder Gabelzinken eines Gabelstaplers versehen ist. Die Tragflächen (20a, 20b, 20c; 20d, 20e, 20f) des Tragrahmens (2) wirken nur mit den Auffahrflächen (16a, 16b, 16c, 16d) der Bodenroller-Tragpalette (15) zusammen und die Bodenroller-Tragpalette (15) wird nur im Bereich der Auffahrflächen (16a, 16b, 16c, 16d) der Bodenroller (B1-B4) mittels der Tragflächen (20a, 20b, 20c; 20d, 20e, 20f) von dem Tragrahmen (2) getragen.

## Beschreibung

Die Erfindung betrifft einen Routenzuganhänger für einen Routenzug mit einem Tragrahmen, der an einem Fahrwerk über eine Hubvorrichtung gegenüber einer Fahrbahnoberfläche anhebbar und absenkbar abgestützt ist, wobei der Tragrahmen eine seitliche Ladeöffnung zur Aufnahme von in die Ladeöffnung quer zur Längsrichtung des Routenzuganhängers ein- und ausschiebbaren Bodenrollern aufweist.

Für den innerbetrieblichen Transport von Lasten, beispielsweise im Produktionsbereich von Produktionsbetrieben, kommen zunehmend Routenzüge zum Einsatz, die aus einem Zugfahrzeug, beispielsweise einem Schlepper, und einer Mehrzahl von Routenzuganhängern bestehen, auf den die Lasten transportiert werden. Im Allgemeinen sind diese Lasten auf Paletten oder in Gitterboxen oder auf als Bodenrollern ausgebildeten Trolleywagen gelagert, die in den Routenzuganhängern transportiert werden. Die Abmessungen der Routenzuganhänger sind hierbei auf die Normabmessungen einer Palette abgestimmt, in der Regel auf die Abmessungen einer Europalette.

Zunehmend kommen Routenzuganhänger zum Einsatz, bei denen die Lasten auf Bodenrollern gelagert sind, die im Produktionsbereich des Produktionsbetriebs auf Rollen verfahren werden können und die von dem Routenzuganhänger innerhalb des Produktionsbetriebs transportiert werden können. Ein als Bodenroller ausgebildeter Trolleywagen ist dabei üblicherweise mit mindestens zwei Lenkrollen ausgerüstet und besitzt insgesamt vier Rollen. Ein derartiger Bodenroller kann von einem Mitarbeiter in der Produktion leicht von Hand in die gewünschte Position zur Entnahme der geladenen Last verschoben werden. In dem Routenzug werden die Bodenroller nicht auf den eigenen Rollen bewegt, sondern in den Routenzuganhängern angehoben, um eine bessere Spurführung der hintereinander laufenden Routenzuganhängern zu erreichen, wenn die Rollen bzw. Achsen der Routenzuganhänger mit dem vollen Gewicht belastet werden.

Hierbei sind Bodenroller bekannt, die kleinere Abmessungen als die Abmessungen einer Europalette haben und beispielsweise als Halb-Paletten-Bodenroller ausgeführt sind, die die Abmessungen einer halben Europalette aufweisen, oder als Viertel-Paletten-Bodenroller ausgeführt sind, die die Abmessungen einer viertel Europalette aufweisen. Derartige Bodenroller werden in dem Produktionsbetrieb auf einer Bodenroller-Tragpalette angeliefert, die als Systempalette ausgeführt ist und wiederum die Abmessungen einer Europalette aufweist. Die Handhabung der Bodenroller-Tragpalette kann mittels eines Hubwagens oder eines Gabelstaplers erfolgen.

Um derartige Halb-Paletten-Bodenroller bzw. Viertel-Paletten-Bodenroller mit dem Routenzuganhänger transportieren zu können, ist es bekannt, den Routenzuganhänger mit mehreren Hubzinken zu versehen, mit denen die Bodenroller aufgenommen und angehoben werden können. Ein derartiger mit Hubzinken für Bodenroller versehener Routenzuganhänger ist aus der DE 20 2016 102 994 U1 bekannt. Bei einem derartigen Routenzuganhänger ist jedoch nachteilig, dass die auf einer Bodenroller-Tragpalette im Produktionsbetrieb angelieferten, mit einer Last beladenen Bodenroller einzeln von der Bodenroller-Tragpalette auf den Routenzuganhänger umgeladen werden müssen, d.h. die beladenen Bodenroller einzeln von der Bodenroller-Tragpalette abgeladen und auf einen entsprechenden Hubzinken des Routenzuganhängers aufgefahren werden müssen, und nach dem Umlauf im Produktionsbetrieb die leeren Bodenroller wieder einzeln von dem Routenzuganhänger auf die Bodenroller-Tragpalette umgeladen werden müssen, d.h. die leeren Bodenroller einzeln von dem Routenzuganhänger abgeladen und auf die Bodenroller-Tragpalette aufgefahren werden müssen. Das Umladen der mit einer Last beladenen Bodenroller sowie der leeren Bodenroller zwischen der Bodenroller-Tragpalette und dem Routenzuganhänger führt somit zu einer aufwändigen Handhabung der Bodenroller in einem Produktionsbetrieb.

Der vorliegenden Erfindung liegt die Aufgabe zugrunde, einen Routenzuganhänger der eingangs genannten Gattung zur Verfügung zu stellen, mit dem auf einer Bodenroller-Tragpalette befindliche Bodenroller, insbesondere Halb-Paletten-Bodenroller und/oder Viertel-Paletten-Bodenroller, auf einfacher und schneller Weise in einem Produktionsbetrieb gehandhabt werden können.

Diese Aufgabe wird erfindungsgemäß dadurch gelöst, dass der anhebbare und absenkbare Tragrahmen mit Tragflächen zur Aufnahme einer Bodenroller-Tragpalette versehen ist, wobei die Bodenroller-Tragpalette mit mehreren Auffahrflächen zur Aufnahme mehrerer Bodenroller versehen ist und wobei die Bodenroller-Tragpalette zwischen den Auffahrflächen mit nach unten offenen Einfahrkanälen für Radarme eines Hubwagens oder Gabelzinken eines Gabelstaplers versehen ist, wobei die Tragflächen des Tragrahmens nur mit den Auffahrflächen der Bodenroller-Tragpalette zusammenwirken und die Bodenroller-Tragpalette nur im Bereich der Auffahrflächen der Bodenroller mittels der Tragflächen von dem Tragrahmen getragen wird. Der erfindungsgemäße Routenzuganhänger ist somit zum Mitführen einer Bodenroller-Tragpalette ausgeführt, auf der mehrere Bodenroller mitgeführt werden können. Der erfindungsgemäße Routenzuganhänger ist hierzu an dem Tragrahmen mit Tragflächen versehen, mit denen eine Bodenroller-Tragpalette von dem Tragrahmen getragen werden kann. Sofern auf der Bodenroller-Tragpalette eine oder mehrere Bodenroller auf den Auffahrflächen angeordnet sind, kann somit von dem Tragrahmen und somit dem Routenzuganhänger eine Einheit aus Bodenroller-Tragpalette und auf der Bodenroller-Tragpalette befindlichen Bodenrollern in dem Routenzuganhänger mitgeführt werden. Die Tragflächen des Tragrahmens sind nur an den Bereichen der Auffahrflächen der Bodenroller-Tragpalette angeordnet, jedoch nicht in den Bereichen der nach unten offenen Einfahrkanälen der Bodenroller-Tragpalette, so dass die Bodenroller-Tragpalette mit in den Einfahrkanälen befindlichen Radarmen eines Hubwagens oder Gabelzinken eines Gabelstaplers auf den Tragflächen des Tragrahmens abgesenkt werden kann, um eine Bodenroller-Palette in den Routenzuganhänger einzuladen, oder von den Tragflächen des Tragrahmens angehoben werden kann, um eine Bodenroller-Palette aus dem Routenzuganhänger auszuladen. Der mit den Tragflächen für die Bodenroller-Tragpalette versehene erfindungsgemäße Routenzuganhänger ermöglicht in einfacher und schneller Weise in einem Produktionsbetrieb eine Handhabung von auf einer Bodenroller-Tragpalette befindlichen Bodenrollern, insbesondere Halb-Paletten-Bodenroller und/oder Viertel-Paletten-Bodenroller, da die Bodenroller-Tragpalette zusammen mit den darauf befindlichen Bodenrollern in den Routenzuganhänger eingeladen und ausgeladen werden kann, so dass kein aufwändiges einzelnes Umladen der vollen bzw. leeren Bodenroller zwischen Routenzuganhänger und Bodenroller-Tragpalette erforderlich ist.

Gemäß einer vorteilhaften Weiterbildung der Erfindung weist der Tragrahmen im Bereich der Einfahrkanäle der auf den Tragflächen des Tragrahmens abgesetzten Bodenroller-Tragpalette keine Tragflächen für die Bodenroller-Tragpalette auf, so dass die Einfahrkanäle der Bodenroller-Tragpalette nach unten offen sind und von Radarmen eines Hubwagens oder Gabelzinken eines Gabelstaplers unterfahren werden können und die Bodenroller-Tragpalette von einem Hubwagen oder einem Gabelstapler über die Ladeöffnung quer zur Längsrichtung des Routenzuganhängers auf den Routenzuganhänger aufgeladen oder von dem Routenzuganhänger abgeladen werden kann. Radarme eines Hubwagens weisen an den Spitzen Lastrollen auf, mit denen der Hubwagen auf einer Fahrbahn abgestützt ist. Dadurch dass der Tragrahmen im Bereich der Einfahrkanäle der auf den Tragflächen des Tragrahmens abgesetzten Bodenroller-Tragpalette keine Tragflächen für die Bodenroller-Tragpalette aufweist, sind die Einfahrkanäle der Bodenroller-Tragpalette nach unten offen, auch wenn die Bodenroller-Tragpalette in den Routenzuganhänger eingeladen ist. Mit einem Hubwagen kann daher die Bodenroller-Tragpalette mitsamt darauf befindlicher Bodenroller in den Routenzuganhänger eingeladen bzw. ausgeladen werden, ohne dass mit den Lastrollen an den Radarmen über störende Kanten gefahren werden muss.

Besondere Vorteile ergeben sich, wenn gemäß einer Weiterbildung der Erfindung die Tragflächen des Tragrahmens bodengleich abgesenkt werden können, so dass die Bodenroller auf die Auffahrflächen der in dem Routenzuganhänger befindlichen Bodenroller-Tragpalette geschoben oder von den Auffahrflächen einer in dem Routenzuganhänger befindlichen Bodenroller-Tragpalette gezogen werden können. Durch ein bodengleiches Absenken der Tragflächen des Tragrahmens auf die Fahrbahnoberfläche kann auch die von den Tragflächen des Tragrahmens getragene Bodenroller-Tragpalette mit den Auffahrflächen der Bodenroller bodengleich auf die Fahrbahnoberfläche abgesenkt werden, so dass die Bodenroller in der abgesenkten Stellung des Tragrahmens in einfacher Weise von der auf dem Routenzuganhänger aufgeladenen Bodenroller-Tragpalette auf die Fahrbahnoberfläche heruntergeschoben und somit ausgeladen werden können bzw. von der Fahrbahnoberfläche auf die auf dem Routenzuganhänger aufgeladenen Bodenroller-Tragpalette hinaufgeschoben und somit eingeladen werden können.

Gemäß einer bevorzugten Ausgestaltungsform der Erfindung ist der Tragrahmen in Draufsicht C-förmig und besteht aus einem seitlichen Längsträger sowie zwei rechtwinklig zu dem Längsträger angeordneten Querträgern und weist der Tragrahmen an der dem Längsträger gegenüberliegenden Seite die Ladeöffnung auf, wobei die Tragflächen für die Bodenroller-Tragpalette fest mit dem Tragrahmen verbunden sind. Über die seitlich offene Ladeöffnung kann somit auf einfacher Weise die Bodenroller-Tragpalette in den Routenzuganhänger eingeladen bzw. ausgeladen werden sowie die Bodenroller eingeladen und ausgeladen werden.

Gemäß einer vorteilhaften Ausführungsform der Erfindung ist die Bodenroller-Tragpalette mit zwei parallel zueinander angeordneten Einfahrkanälen versehen, wobei seitlich an dem ersten Einfahrkanal eine erste Auffahrfläche und eine zweite Auffahrfläche für Bodenroller und seitlich an dem zweiten Einfahrkanal eine dritte Auffahrfläche und eine vierte Auffahrfläche für Bodenroller ausgebildet ist, wobei der Tragrahmen mit einer ersten Tragfläche für die erste Auffahrfläche, mit einer zweiten Tragfläche für die vierte Auffahrfläche und mit einer dritten Tragfläche für die zweite und die dritte Auffahrfläche versehen ist. Auf einer derartigen Bodenroller-Tragpalette können als Halb-Paletten-Bodenroller und/oder als Viertel-Paletten-Bodenroller ausgebildete Bodenroller transportiert werden. Die drei Tragflächen an dem Tragrahmen unterstützen hierbei die vier Auffahrflächen der Bodenroller-Tragpalette, so dass die in dem Routenzuganhänger aufgeladene Bodenroller-Tragpalette nicht zu Durchbiegungen und Verbiegungen neigt.

Besondere Vorteile ergeben sich, wenn gemäß einer Weiterbildung der Erfindung die Tragflächen von Bodenflächenabschnitten des Tragrahmens gebildet sind. Dies ermöglicht es auf einfache Weise, dass in der abgesenkten Stellung des Tragrahmens die Tragflächen bodengleich sowie die von den Tragflächen des Tragrahmens getragene Bodenroller-Tragpalette mit den Auffahrflächen der Bodenroller bodengleich auf die Fahrbahnoberfläche abgesenkt werden kann, so dass die Bodenroller in der abgesenkten Stellung des Tragrahmens in einfacher Weise von der auf dem Routenzuganhänger aufgeladenen Bodenroller-Tragpalette auf die Fahrbahnoberfläche heruntergeschoben und somit ausgeladen werden können bzw. von der Fahrbahnoberfläche auf die auf dem Routenzuganhänger aufgeladenen Bodenroller-Tragpalette hinaufgeschoben und somit aufgeladen werden können. Vorteilhafterweise ist gemäß einer Ausgestaltungsform der Erfindung die erste Tragfläche an einem Querträger des Tragrahmens angeordnet. Dies ermöglicht es bei geringem Bauaufwand die erste Tragfläche fest mit dem Tragrahmen zu verbinden.

Vorteilhafterweise sind gemäß einer Ausgestaltungsform der Erfindung die zweite und dritte Tragfläche an dem Längsträger des Tragrahmens angeordnet. Dies ermöglicht es bei geringem Bauaufwand die zweite und dritte Tragfläche fest mit dem Tragrahmen zu verbinden.

Besondere Vorteile sind erzielbar, wenn gemäß einer Weiterbildung der Erfindung eine oder mehrere der drei Tragflächen mit geneigten Führungsschrägen versehen sind, die die Bodenroller-Tragpalette in Längsrichtung des Routenzuganhängers führen oder sichern. Mit an den Tragflächen angeordneten geneigten Führungsschrägen wird einerseits das Einladen der Bodenroller-Tragpalette in den Routenzuganhänger erleichtert, da die geneigten Führungsschrägen beim Absenken der Bodenroller-Tragpalette auf die Tragflächen die Bodenroller-Tragpalette führen und Positionierungenauigkeiten der Bodenroller-Tragpalette zu den Tragflächen ausgleichen, und andererseits die in den Routenzuganhänger eingeladene Bodenroller-Tragpalette während des Transport in dem Routenzuganhänger gegen Verrutschen in Längsrichtung des Routenzuganhängers sichern.

Besondere Vorteile ergeben sich, wenn gemäß einer Weiterbildung der Erfindung der Routenzuganhänger mit Anschlagelementen versehen ist, die die Bodenroller-Tragpalette in Querrichtung des Routenzuganhängers sichern. Mit derartigen Anschlagelementen kann die in den Routenzuganhänger eingeladene Bodenroller-Tragpalette während des Transports in dem Routenzuganhänger auf einfache Weise gegen Verrutschen in Querrichtung des Routenzuganhängers gesichert werden.

Die Bodenroller sind vorteilhafterweise als Halb-Paletten-Bodenroller, die die Abmessungen einer halben Europalette aufweisen, oder als Viertel-Paletten-Bodenroller ausgebildet, die die Abmessungen einer viertel Europalette aufweisen.

Der Tragrahmen ist gemäß einer vorteilhaften Ausgestaltungsform der Erfindung derart ausgeführt, dass dieser eine oder mehrere Bodenroller-Tragpaletten aufnehmen kann und hierzu mit Tragflächen für eine oder mehrere Bodenroller-Tragpaletten versehen. Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen Routenzuganhänger in einer perspektivischen Darstellung,
- Figur 2: den Routenzuganhänger der Figur 1 mit einer durch einen Hubwagen gehandhabten Bodenroller-Tragpalette, auf der sich mehrere Bodenroller befinden,
- Figur 3: den Routenzuganhänger der Figur 1 mit einer teilweise auf den Routenzuganhänger aufgeladenen Bodenroller-Tragpalette,
- Figur 4: den Routenzuganhänger der Figur 1 mit einer vollständig auf den Routenzuganhänger aufgeladenen Bodenroller-Tragpalette,
- Figur 5: den Routenzuganhänegr der Figur 1 mit einer vollständig auf den Routenzuganhänger aufgeladenen Bodenroller-Tragpalette ohne den die Bodenroller-Tragpalette handhabenden Hubwagen,
- Figur 6: den Routenzuganhänger der Figur 1 mit einer vollständig auf den Routenzuganhänger aufgeladenen Bodenroller-Tragpalette in der Transportstellung mit angehobener Bodenroller-Tragpalette,
- Figur 7: die Figur 6 mit einer Seitenansicht des Routenzuganhängers,
- Figur 8: die Figur 6 mit einer Draufansicht des Routenzuganhängers,
- Figur 9: eine Seitenansicht des Routenzuganhängers der Figur 1,
- Figur 10: eine Draufsicht des Routenzuganhängers der Figur 1,
- Figur 11: eine perspektivische Darstellung des Routenzuganhängers mit aufgeladener Bodenroller-Tragpalette einem teilweise entladenen Bodenrollern,
- Figur 12: die Figur 11 mit zwei teilweise entladenen Bodenrollern,
- Figur 13: die Figur 11 mit zwei vollständig entladenen Bodenrollern und
- Figur 14: die Figur 11 mit allen vier vollständig entladenen Bodenrollern.

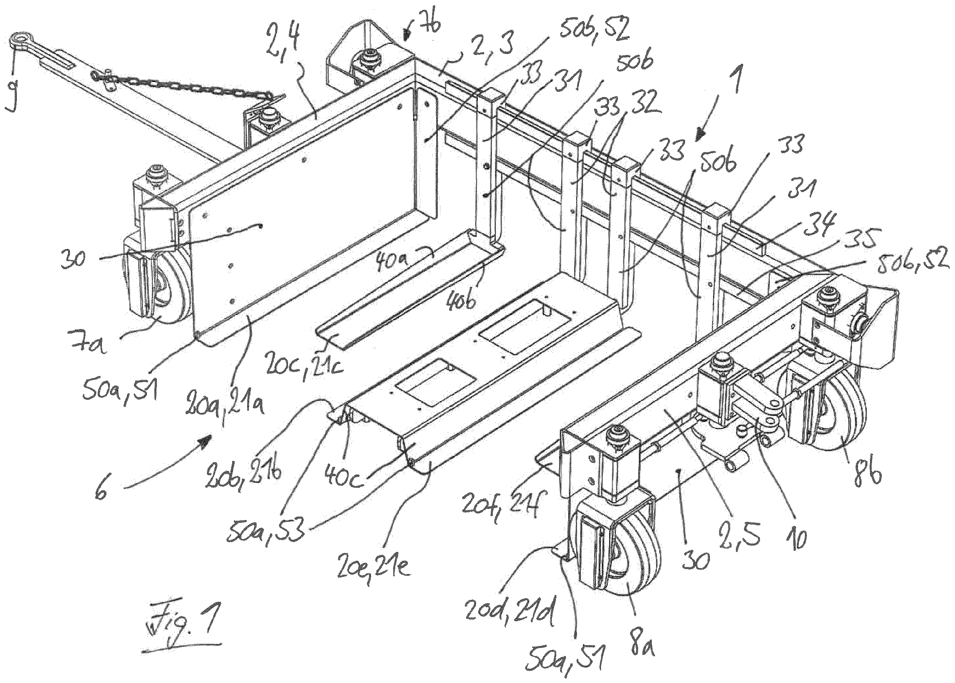

In den Figuren 1, 9 und 10 ist ein erfindungsgemäßer Routenzuganhänger 1 für einen Routenzug in einer perspektivischen Ansicht, in einer Seitenansicht und in einer Draufsicht dargestellt. Der Routenzuganhänger 1 weist einen in der Draufsicht C-förmigen Tragrahmen 2 auf, der aus einem seitlichen Längsträger 3 und einem vorderen Querträger 4 sowie einem hinteren Querträger 5 besteht. Die beiden Querträger 4, 5 sind rechtwinklig zu dem Längsträger 3 angeordnet. Die beiden Querträger 4, 5 sind den Enden des Längsträgers 3 angeordnet. Der Tragrahmen 2 weist an der dem Längsträger 3 gegenüberliegenden Seite eine Ladeöffnung 6 auf.

Der Routenzuganhänger 1 weist ein Fahrwerk auf, das im dargestellten Ausführungsbeispiel aus zwei Vorderradrollen 7a, 7b und zwei Hinterradrollen 8a, 8b besteht. Die Vorderradrollen 7a, 7b sind bevorzugt an den äußeren Ecken des vorderen Querträgers 4 angeordnet. Entsprechend sind die Hinterradrollen 8a, 8b bevorzugt an den äußeren Ecken des hinteren Querträgers 5 angeordnet.

Durch eine nicht näher dargestellte Hubvorrichtung zwischen dem Tragrahmen 2 und dem von den Vorderradrollen 7a, 7b sowie den Hinterradrollen 8a, 8b gebildeten Fahrwerk kann der Tragrahmen 2 relativ zu dem von den Vorderradrollen 7a, 7b sowie den Hinterradrollen 8a, 8b gebildeten Fahrwerk und somit gegenüber der Fahrbahnoberfläche angehoben und abgesenkt werden.

An dem vorderen Querträger 4 ist weiterhin eine Anhängerdeichsel 9 angeordnet sowie an dem hinteren Querträger 5 eine Anhängerkupplung 10.

Die an dem vorderen Querträger 4 angeordneten Vorderradrollen 7a, 7b sind bevorzugt um eine vertikale Achse lenkbar und zur Lenkung mit einer Lenkbewegung der Anhängerdeichsel 9 gekoppelt, so dass die Vorderradrollen 7a, 7b bei einer Kurvenfahrt des Routenzuganhängers 1 mit einem entsprechenden Lenkwinkel eingeschlagen werden. Die an dem hinteren Querträger 5 angeordneten Hinterradrollen 8a, 8b sind bevorzugt ebenfalls um eine vertikale Achse lenkbar, wobei der Lenkeinschlag der Hinterradrollen 8a, 8b abhängig von dem Lenkeinschlag der Vorderradrollen 7a, 7b gleichsinnig erfolgt. Dies kann beispielsweise durch eine mechanische Kopplung erfolgen, etwa durch eine im Inneren des Längsträgers 3 angeordnete Verbindungs- und Koppelstange. Weiterhin kann auch die Anhängerkupplung 10 um eine vertikale Achse drehbar ausgeführt sein und sich auf den Lenkeinschlag der Hinterradrollen 8a, 8b ausrichten.

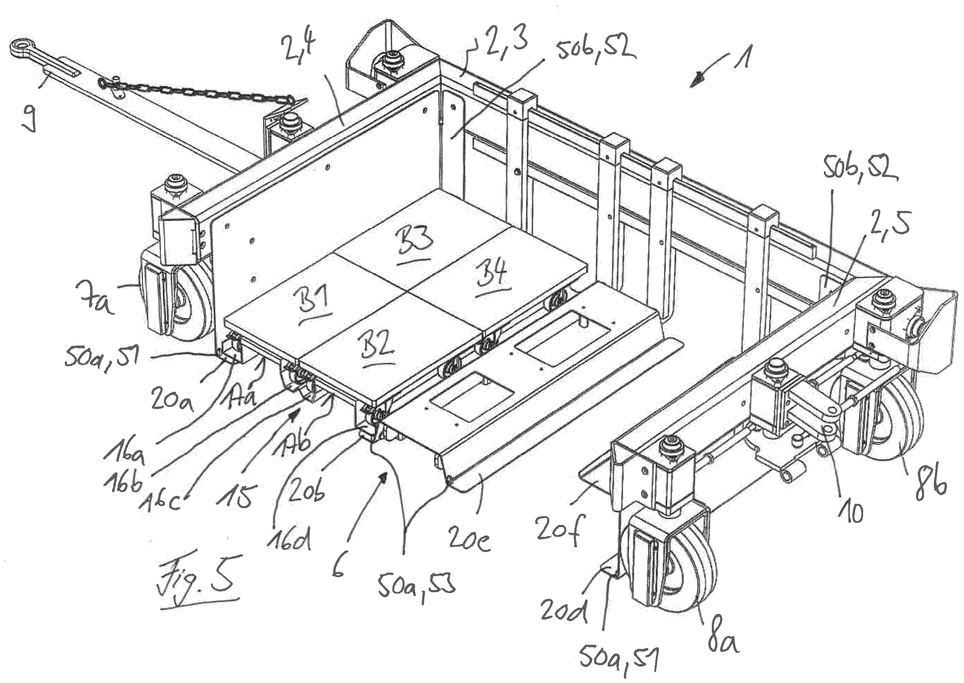

In den Tragrahmen 2 kann - wie in den Figuren 5 bis 8 dargestellt ist - über die seitliche Ladeöffnung 6 quer zur Längsrichtung des Routenzuganhängers 1 mindestens eine Bodenroller-Tragpalette 15 und mehrere auf dieser befindliche Bodenroller B1, B2, B3, B4 eingeladen bzw. ausgeladen werden. Die Bodenroller B1-B4 sind im dargestellten Ausführungsbeispiel als Viertel-Paletten-Bodenroller ausgeführt sind, die die Abmessungen einer viertel Europalette aufweisen und somit eine Länge von 600mm und eine Breite von 400mm aufweisen. Die vier Bodenroller B1-B4 weisen jeweils vier Rollen auf, mit denen die Bodenroller B1-B4 auf der Bodenroller-Tragpalette 15 stehen. Die Bodenroller-Tragpalette 15 ist als Systempalette ausgeführt und weist die Abmessungen einer Europalette auf und somit eine Länge von 1200mm und eine Breite von 800mm.

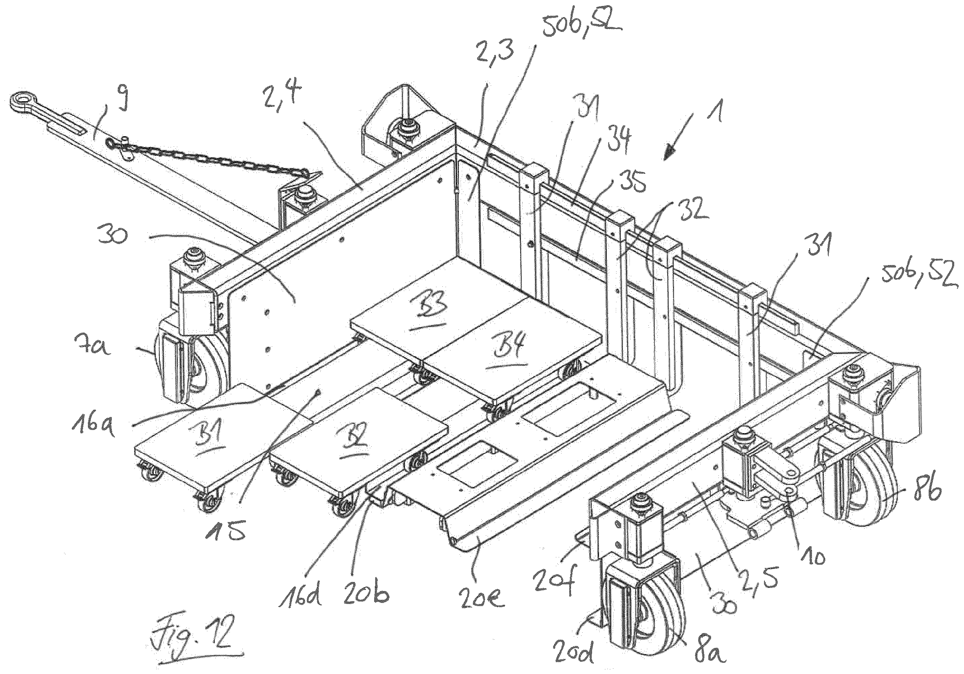

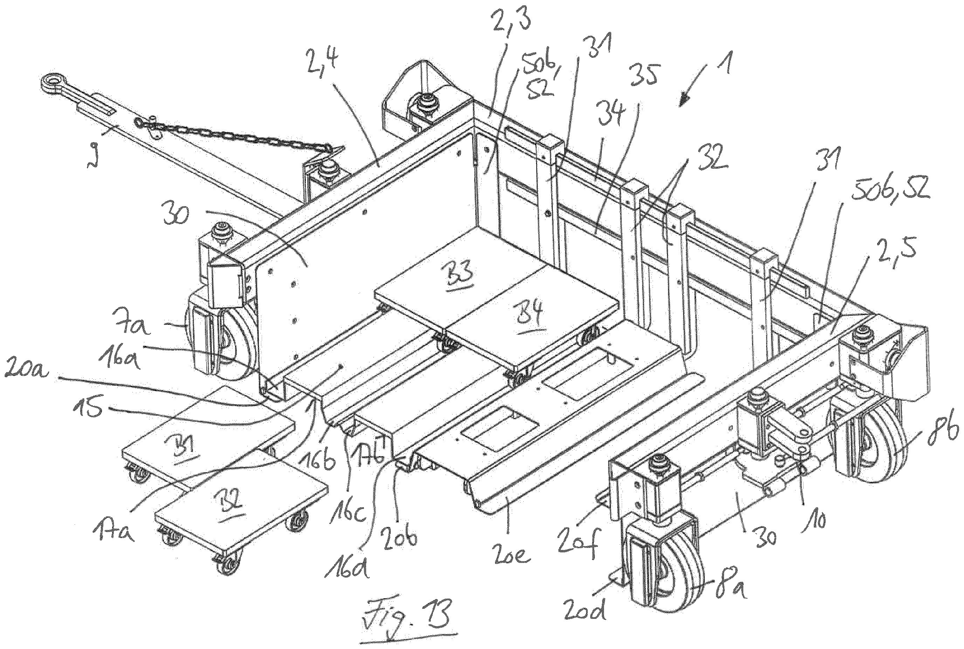

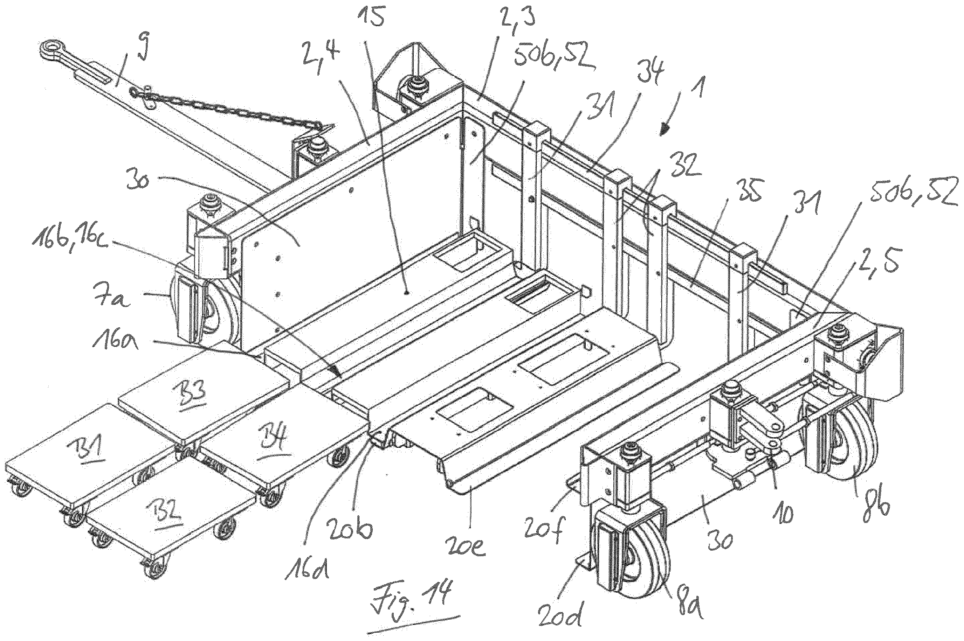

Der in den Figuren 1 bis 14 dargestellte Routenzuganhänger 1 ist für die Aufnahme von zwei Bodenroller-Tragpaletten 15 ausgebildet, wobei eine erste Bodenroller-Tragpalette 15 in der vorderen Hälfte des Routenzuganhängers 1 angeordnet werden kann und eine zweite Bodenroller-Tragpalette 15 in der hinteren Hälfte des Routenzuganhängers 1.

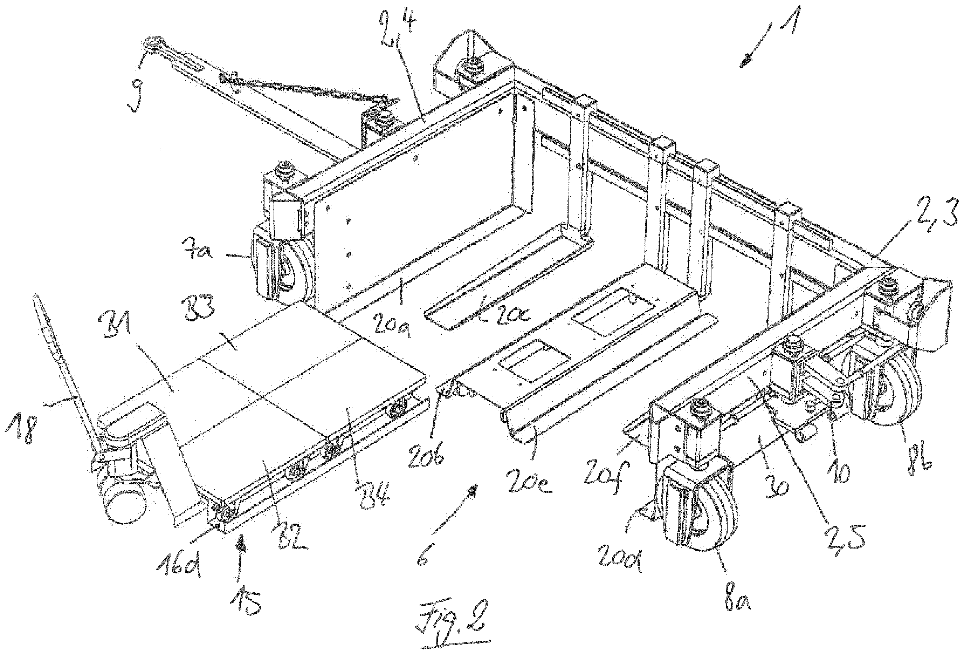

Die Bodenroller-Tragpalette 15 weist - wie insbesondere aus den Figuren 5, 7, 13 und 14 ersichtlich ist - vier Auffahrflächen 16a, 16b, 16c, 16d auf, auf denen die Bodenroller B1-B4 mit ihren Rollen stehen, und zwei zwischen den Auffahrflächen 16a, 16b, 16c, 16d angeordnete Einfahrkanäle 17a, 17b auf, die nach vertikal unten offen ausgebildet sind. In die beiden Einfahrkanäle 17a, 17b der Bodenroller-Tragpalette 15 kann - wie in den Figuren 2 bis 4 dargestellt ist - mit Radarmen eines Hubwagens 18, beispielsweise eines Handgabelhubwagens, bzw. den Gabelzinken eines Gabelstaplers - eingefahren werden, um die Bodenroller-Tragpalette 15 anzuheben und zu verfahren.

Die zwei Einfahrkanäle 17a, 17b sind parallel zueinander an der Bodenroller-Tragpalette 15 angeordnet. Seitlich an dem ersten Einfahrkanal 17a sind die erste Auffahrfläche 16a und die zweite Auffahrfläche 16b für die Bodenroller B1, B3 angeordnet und seitlich an dem zweiten Einfahrkanal 17b sind die dritte Auffahrfläche 16c und die vierte Auffahrfläche 16d für die Bodenroller B2, B4 angeordnet.

Die Bodenroller-Tragpalette 15 bildet somit eine Tragpalette, auf die bzw. von der nach dem Roll-on-Roll-off-Prinzip die Bodenroller B1-B4 von Hand geschoben werden können, sofern die Auffahrflächen 16a-16d bodengleich auf eine Fahrbahnoberfläche FB abgesenkt sind.

Erfindungsgemäß ist der anhebbare und absenkbare Tragrahmen 2 des Routenzuganhängers 1 mit Tragflächen 20a, 20b, 20c, 20d, 20e, 20f zur Aufnahme der Bodenroller-Tragpaletten 15 versehen. Die Tragflächen 20a, 20b, 20c, 20d, 20e, 20f des Tragrahmens 2 sind derart ausgeführt, dass die Tragflächen 20a, 20b, 20c, 20d, 20e, 20f des Tragrahmens 2 nur in den Bereichen der Auffahrflächen 16a, 16b, 16c, 16d der entsprechenden Bodenroller-Tragpalette 15 angeordnet sind und somit mit den Auffahrflächen 16a, 16b, 16c, 16d der entsprechenden Bodenroller-Tragpalette 15 zusammenwirken, so dass die Bodenroller-Tragpalette 15 nur im Bereich der Auffahrflächen 16a, 16b, 16c, 16d für die Bodenroller B1-B4 mittels der Tragflächen 20a, 20b, 20c, 20d, 20e, 20f von dem Tragrahmen 2 getragen wird. Die Tragflächen 20a, 20b, 20c sind in der vorderen Hälfte des Routenzuganhängers 1 angeordnet und dienen zur Aufnahme der vorderen Bodenroller-Tragpalette 15. Die Tragflächen 20d, 20e, 20f sind in der hinteren Hälfte des Routenzuganhängers 1 angeordnet und dienen zur Aufnahme der hinteren Bodenroller-Tragpalette 15.

Im Bereich der Einfahrkanäle 17a, 17b der Bodenroller-Tragpalette 15 weist der Tragrahmen 2 keine Tragflächen für die Bodenroller-Tragpalette 15 auf, so dass die Einfahrkanäle 17a, 17b der in dem Tragrahmen 2 eingeladenen Bodenroller-Tragpalette 15 nach unten offen sind und von den Radarmen des Hubwagens 18 oder den Gabelzinken eines Gabelstaplers unterfahren werden können. Die Bodenroller-Tragpalette 15 kann somit von dem Hubwagen 18 oder einem Gabelstapler über die Ladeöffnung 6 quer zur Längsrichtung des Routenzuganhängers 1 auf den Routenzuganhänger 1 aufgeladen oder von dem Routenzuganhänger 1 abgeladen werden.

Die die Bodenroller-Tragpalette 15 tragenden Tragflächen 20a, 20b, 20c, 20d, 20e, 20f sind von horizontal angeordneten Bodenflächenabschnitten 21 a, 21 b, 21 c, 21 d, 21 e, 21f des Tragrahmens 2 gebildet.

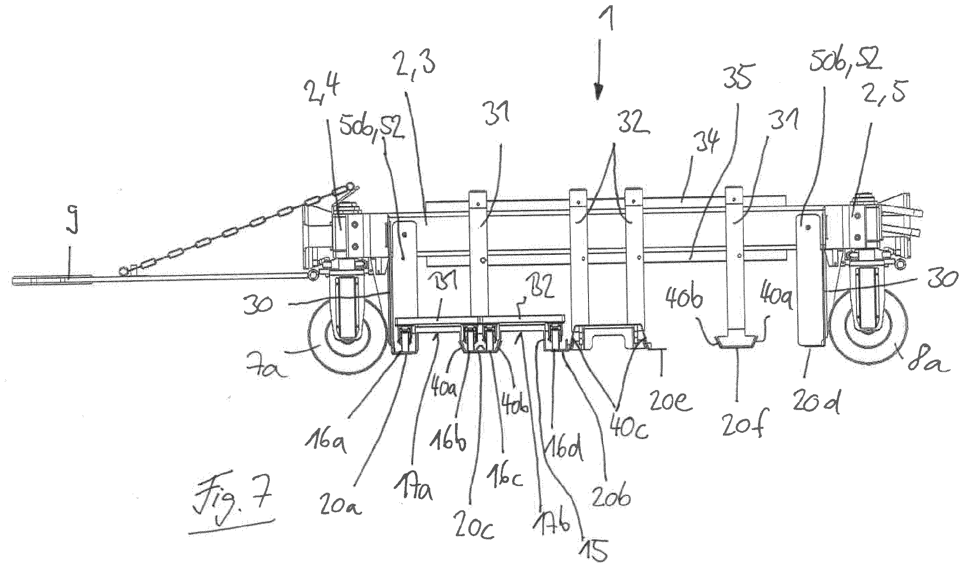

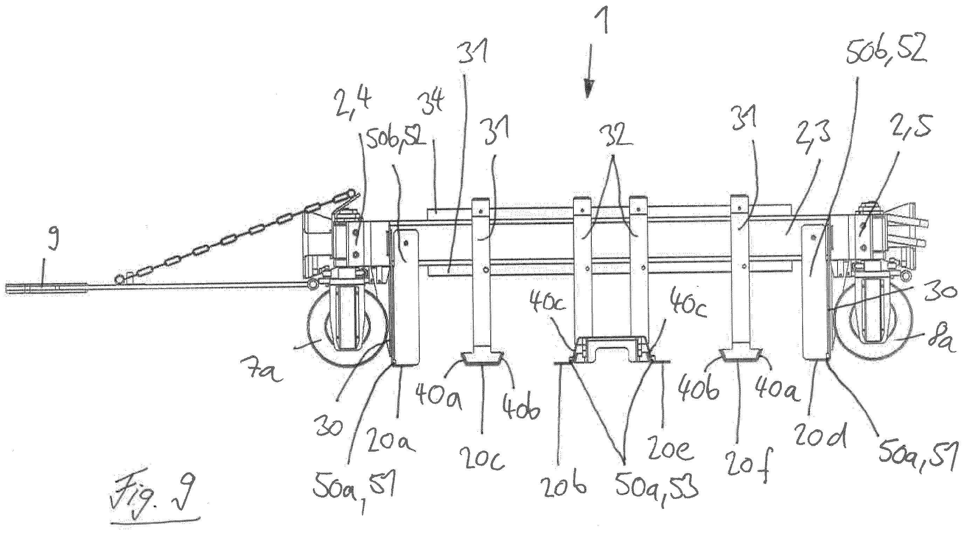

Der Tragrahmen 2 ist - wie insbesondere in den Figuren 7 und 9 ersichtlich ist - für die vordere Bodenroller-Tragpalette 15 mit einer ersten Tragfläche 20a versehen, auf der die vordere Bodenroller-Tragpalette 15 mit der ersten Auffahrfläche 16a angeordnet werden kann. Der Tragrahmen 2 ist weiterhin mit einer zweiten Tragfläche 20b versehen, auf der die vordere Bodenroller-Tragpalette 15 mit der vierten Auffahrfläche 16d angeordnet werden kann. Der Tragrahmen 2 ist weiterhin mit einer dritten Tragfläche 20c, versehen, auf der die vordere Bodenroller-Tragpalette 15 mit der zweiten Auffahrfläche 16b und der dritten Auffahrfläche 16c angeordnet werden kann.

Die erste Tragfläche 20a für die vordere Bodenroller-Tragpalette 15 ist an dem vorderen Querträger 4 des Tragrahmens 2 angeordnet und von einem horizontalen Bodenblechabschnitt 21a gebildet, der über ein vertikales Halteblech 30 an dem vorderen Querträger 4 befestigt ist.

Die zweite Tragfläche 20b und die dritte Tragfläche 20c für die vordere Bodenroller-Tragpalette 15 sind an dem Längsträger 3 des Tragrahmens 2 angeordnet. Die Tragflächen 20b und 20c sind hierzu an vertikalen Trägern 31, 32 befestigt, die mittels Halteklammern 33 an einer an der Oberseite des Längsträgers 3 angeordneten Halteschiene 34 sowie an einer an der Unterseite des Längsträgers 3 angeordneten Halteschiene 35 eingehängt sind. Die Träger 31, 32 sind in Längsrichtung des Längsträgers 3 gegen ein Verrutschen gesichert.

Die Tagflächen 20a, 20b, 20c sind somit fest mit dem anhebbaren und absenkbaren Tragrahmen 2 verbunden.

Die Tragflächen 20b und 20c sind weiterhin mit vertikal geneigten Führungsschrägen 40a, 40b, 40c versehen, die mit entsprechenden Führungsflächen der vorderen Bodenroller-Tragpalette 15 zusammenwirken, die seitlich an den Auffahrflächen 16b, 16c, 16d angeordnet sind. Die Führungsschrägen 40a, 40b, 40c führen und sichern die Bodenroller-Tragpalette 15 in der aufgeladenen Stellung in Längsrichtung des Routenzuganhängers 1.

Der Tragrahmen 2 weist für die hintere Bodenroller-Tragpalette 15 einen analogen Aufbau auf. Für die hintere Bodenroller-Tragpalette 15 ist der Tragrahmen 2 mit einer ersten Tragfläche 20d versehen, auf der die hintere Bodenroller-Tragpalette 15 mit der ersten Auffahrfläche 16a angeordnet werden kann. Der Tragrahmen 2 ist weiterhin mit einer zweiten Tragfläche 20e versehen, auf der die hintere Bodenroller-Tragpalette 15 mit der vierten Auffahrfläche 16d angeordnet werden kann. Der Tragrahmen 2 ist weiterhin mit einer dritten Tragfläche 20f, versehen, auf der die hintere Bodenroller-Tragpalette 15 mit der zweiten Auffahrfläche 16b und der dritten Auffahrfläche 16c angeordnet werden kann.

Die erste Tragfläche 20d für die hintere Bodenroller-Tragpalette 15 ist an dem hinteren Querträger 5 des Tragrahmens 2 angeordnet und von einem horizontalen Bodenblechabschnitt 21d gebildet, der über ein vertikales Halteblech 30 an dem hinteren Querträger 5 befestigt ist.

Die zweite Tragfläche 20e und die dritte Tragfläche 20f für die hintere Bodenroller-Tragpalette 15 sind an dem Längsträger 3 des Tragrahmens 2 angeordnet. Die Tragflächen 20e und 20f sind hierzu an vertikalen Trägern 31, 32 befestigt, die mittels Halteklammern 33 an einer an der Oberseite des Längsträgers 3 angeordneten Halteschiene 34 sowie an einer an der Unterseite des Längsträgers 3 angeordneten Halteschiene 35 eingehängt sind. Die Träger 31, 32 sind in Längsrichtung des Längsträgers 3 gegen ein Verrutschen gesichert.

Die Tagflächen 20d, 20e, 20f sind somit fest mit dem anhebbaren und absenkbaren Tragrahmen 2 verbunden.

Die Tragflächen 20e und 20f sind weiterhin mit vertikal geneigten Führungsschrägen 40a, 40b, 40c versehen, die mit entsprechenden Führungsflächen der hinteren Bodenroller-Tragpalette 15 zusammenwirken, die seitlich an den Auffahrflächen 16b, 16c, 16d angeordnet sind. Die Führungsschrägen 40a, 40b, 40c führen und sichern die Bodenroller-Tragpalette 15 in der aufgeladenen Stellung in Längsrichtung des Routenzuganhängers 1.

An den Tragflächen 20a, 20b, 20c, 20d, 20e, 20f sind - wie in den Figuren 1, 5 und 9 näher ersichtlich ist - weiterhin Anschlagelemente 50a, 50b angeordnet, die die auf dem Routenzuganhänger 2 aufgeladene Bodenroller-Tragpalette 15 in Querrichtung des Routenzuganhängers 2 sichern. An der Tragfläche 20a bzw. der Tragfläche 20d ist ein im Bereich der Ladeöffnung 6 angeordnetes vorderes Anschlagelement 50a angeordnet, das im dargestellten Ausführungsbeispiel von einem Anschlagklotz 51 gebildet, der am Übergang des Bodenflächenabschnitten 21 a zu dem Halteblech 30 angeordnet ist. An der Tragfläche 20a bzw. 20d ist ein im gegenüberliegenden Bereich der Ladeöffnung 6 angeordnetes hinteres Anschlagelement 50b von einem vertikalen Anschlagblech 52 gebildet, das sich von dem Bodenflächenabschnitt 21a zu dem Längsträger 3 erstreckt.

An der Tragfläche 20b bzw. 20e ist ein im Bereich der Ladeöffnung 6 angeordnetes vorderes Anschlagelement 50a angeordnet, das im dargestellten Ausführungsbeispiel von einem Anschlagklotz 53 gebildet ist, der am Übergang des Bodenflächenabschnitten 21 c zu der Führungsschräge 40c angeordnet ist. An der Tragfläche 20b bzw. 20e ist ein im gegenüberliegenden Bereich der Ladeöffnung 6 angeordnetes hinteres Anschlagelement 50b von der Stirnseite des Trägers 32 gebildet.

Die Tragflächen 20a, 20b und 20d, 20e erstrecken sich im Wesentlichen über die gesamte Breite von der Ladeöffnung 6 zu dem Längsträger 3 und unterstützen die Auffahrflächen 16a, 16d der entsprechenden Bodenroller-Tragpalette 15 über die gesamte Länge. Die zwischen den Tragflächen 20a, 20b angeordnete Tragfläche 20c und die zwischen den Tragflächen 20d, 20e angeordnete Tragfläche 20f erstreckt sich von dem Längsträger 3 nicht ganz bis zu der Ladeöffnung 6. An der Tragfläche 20c bzw. der 20f ist lediglich im gegenüberliegenden Bereich der Ladeöffnung 6 ein hinteres Anschlagelement 50b vorgesehen, das von der Stirnseite des Trägers 31 gebildet ist.

Die Tragflächen 20a, 20b, 20c, 20d, 20e, 20f des Tragrahmens 2 können mittels der Hubvorrichtung bodengleich abgesenkt werden, d.h. auf eine Fahrbahnoberfläche abgesenkt werden, wie in der Figur 9 und den Figuren 11-14 dargestellt ist. Dadurch sind auch die oberhalb der Tragflächen 20a, 20b, 20c bzw. 20d, 20e, 20f des Tragrahmens 2 angeordneten Auffahrflächen 16a-16d der in dem Routenzuganhänger 1 befindlichen Bodenroller-Tragpalette 15 im Wesentlichen bodengleich auf die Fahrbahnoberfläche FB abgesenkt. Dies ermöglicht es, dass die Bodenroller B1-B4 von Hand von der Fahrbahnoberfläche FB auf die Auffahrflächen 16a-16d der in dem Routenzuganhänger 1 befindlichen Bodenroller-Tragpalette 15 geschoben und somit aufgeladen werden können bzw. von den Auffahrflächen 16a-16d einer in dem Routenzuganhänger 1 befindlichen Bodenroller-Tragpalette 15 von Hand auf die Fahrbahnoberfläche FB gezogen und somit abgeladen werden können.

In der Figur 1 ist ein erfindungsgemäßer Routenzuganhänger 1 dargestellt, der mit den Tragflächen 20a-20c für eine vordere Bodenroller-Tragpalette 15 und den mit den Tragflächen 20a-20c für eine hintere Bodenroller-Tragpalette 15 versehen ist.

In den Figuren 2 bis 4 ist das Einladen bzw. Ausladen einer Bodenroller-Tragpalette 15, auf der sich mehrere Bodenroller B1-B4 befinden, in die vordere Hälfte des Routenzuganhängers 1 dargestellt. Die Bodenroller-Tragpalette 15 wird von einem Hubwagen 18, beispielsweise einem Handhubwagen, gehandhabt, der mit zwei Radarmen versehen ist, an deren Spitzen jeweils auf der Fahrbahn FB laufende Lastrollen angeordnet sind. Der Hubwagen 18 kann mit den beiden Radarmen in die nach unten offenen Einfahrkanäle 17a, 17b der Bodenroller-Tragpalette 15 einfahren. Durch Anheben der Radarme wird die Bodenroller-Tragpalette 15 angehoben und von dem Hubwagen 18 getragen.

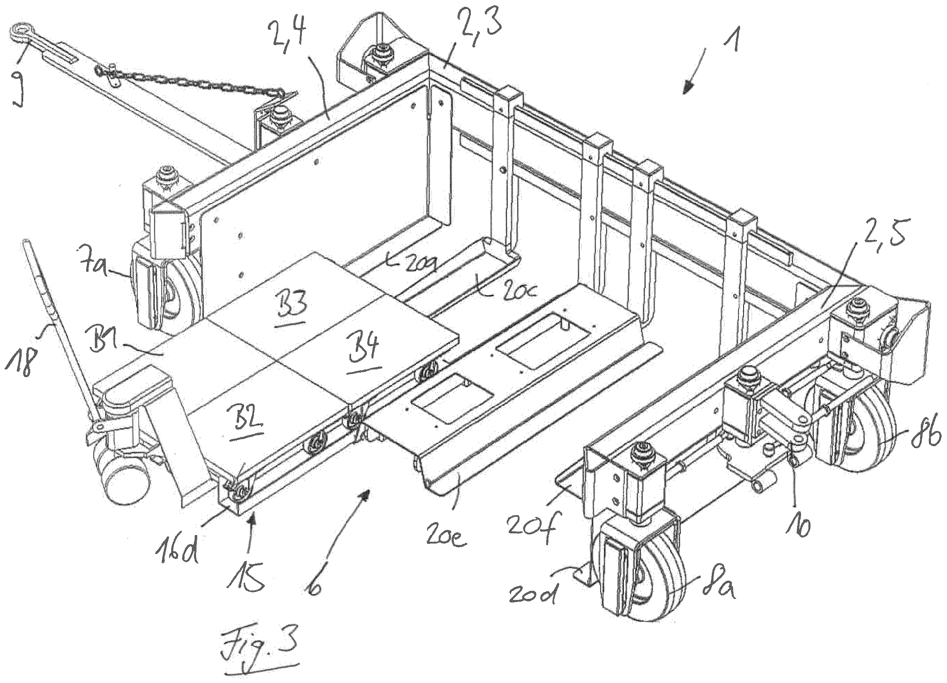

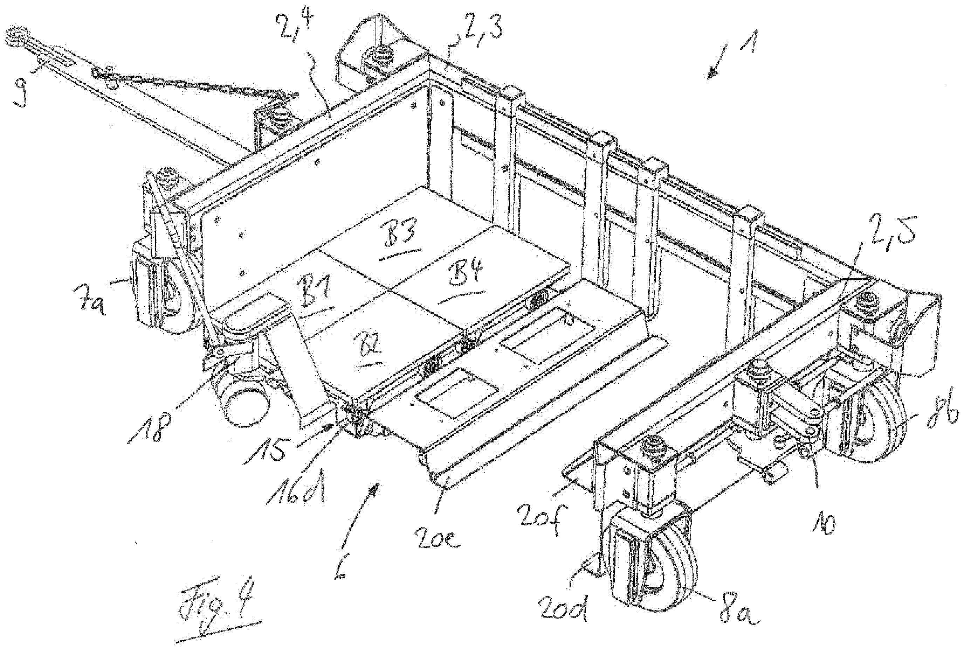

In der Figur 2 befindet sich die auf dem Hubwagen 18 befindliche Bodenroller-Tragpalette 15 seitlich neben der Ladeöffnung 6 des Routenzuganhängers 1. Zum Einladen der Bodenroller-Tragpalette 15 in den Routenzuganhänger 1 wird die Bodenroller-Tragpalette 15 mittels des Hubwagens 1 angehoben und anschließend in Querrichtung des Routenzuganhängers 1 in den Routenzuganhänger 1 eingefahren, wie in den Figuren 3 und 4 dargestellt ist. Nachdem die Bodenroller-Tragpalette 15 mittels des Hubwagens 1 vollständig in den Routenzuganhängers 1 einfahren ist, können die Radarme des Hubwagens 18 abgesenkt werden, so dass die Bodenroller-Tragpalette 15 mit den Auffahrflächen 16a-16d auf die Tragflächen 20a-20c des Routenzuganhängers 1 abgesenkt wird. Die geneigten Führungsschrägen 40a, 40b, 40c führen die Bodenroller-Tragpalette 15 beim Absenken und ermöglichen es, beim Einladen der Bodenroller-Tragpalette 15 mögliche Positionierungenauigkeiten der Bodenroller-Tragpalette 15 in Längsrichtung des Routenzuganhängers 1 auszugleichen. Nach dem Absenken der Bodenroller-Tragpalette 15 auf die Tragflächen 20a-20c des Routenzuganhängers 1 kann mit den Radarmen des Hubwagens 18 aus den Einfahrtkanälen 17a, 17b herausgefahren werden. Die an den Radarmen des Hubwagens 1 angeordneten Lastrollen laufen beim Einladen der Bodenroller-Tragpalette 15 auf der Fahrbahn und müssen keine Kanten überfahren.

Zum Ausladen der in dem Routenzuganhänger 1 befindlichen Bodenroller-Tragpalette 15 aus dem Routenzuganhänger 1 wird mit den Radarmen des Hubwagens 18 in die nach unten offenen Einfahrkanäle 17a, 17b der Bodenroller-Tragpalette 15 eingefahren und die im Routenzuganhänger 1 befindliche Bodenroller-Tragpalette 15 mittels des Hubwagens 1 angehoben und dadurch von den Tragflächen 20a-20c angehoben. Anschließend kann die von dem Hubwagen 18 getragene Bodenroller-Tragpalette 15 in Querrichtung des Routenzuganhängers 1 aus dem Routenzuganhänger 1 herausgefahren werden. Die an den Radarmen des Hubwagens 1 angeordneten Lastrollen laufen beim Ausladen der Bodenroller-Tragpalette 15 auf der Fahrbahn und müssen keine Kanten überfahren.

Das Einladen und Ausladen einer Bodenroller-Tragpalette 15 in den Routenzuganhänger 1 kann bei auf die Fahrbahn abgesenkten Tragflächen 20a-20f erfolgen oder bei angehobenen Tragflächen 20a-20f, sofern die Hubhöhe der Radarme des Hubwagens 18 dies ermöglichen.

In der Figur 5 ist ein erfindungsgemäßer Routenzuganhänger 1 dargestellt, in den eine Bodenroller-Tragpalette 15 mit darauf befindlichen Bodenroller B1-B4 eingeladen ist. In der Figur 5 ist der Tragrahmen 2 des Routenzuganhängers 1 abgesenkt, so dass die Tragflächen 20a-20c auf der Fahrbahn bodengleich aufliegen. Die Bodenroller-Tragpalette 15 ist mit den Auffahrflächen 16a, 16b, 16c, 16d oberhalb der Tragflächen 20a-20c angeordnet, so dass die Bodenroller-Tragpalette 15 durch Anheben des Tragrahmens 2 von der Fahrbahn abgehoben wird und von dem Tragrahmen 2 getragen wird.

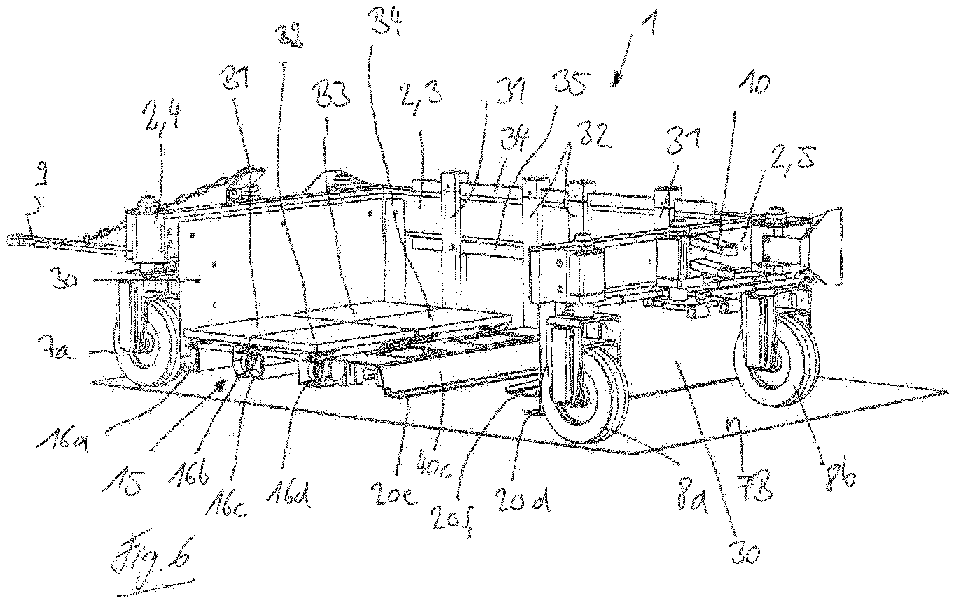

In den Figuren 6 und 7 ist ein erfindungsgemäßer Routenzuganhänger 1 dargestellt, in den eine Bodenroller-Tragpalette 15 mit darauf befindlichen Bodenroller B1-B4 eingeladen ist. In den Figuren 6 und 7 ist der Tragrahmen 2 des Routenzuganhängers 1 angehoben. Die von den Tragflächen 20a-20c getragene Bodenroller-Tragpalette 15 ist somit von der Fahrbahn abgehoben.

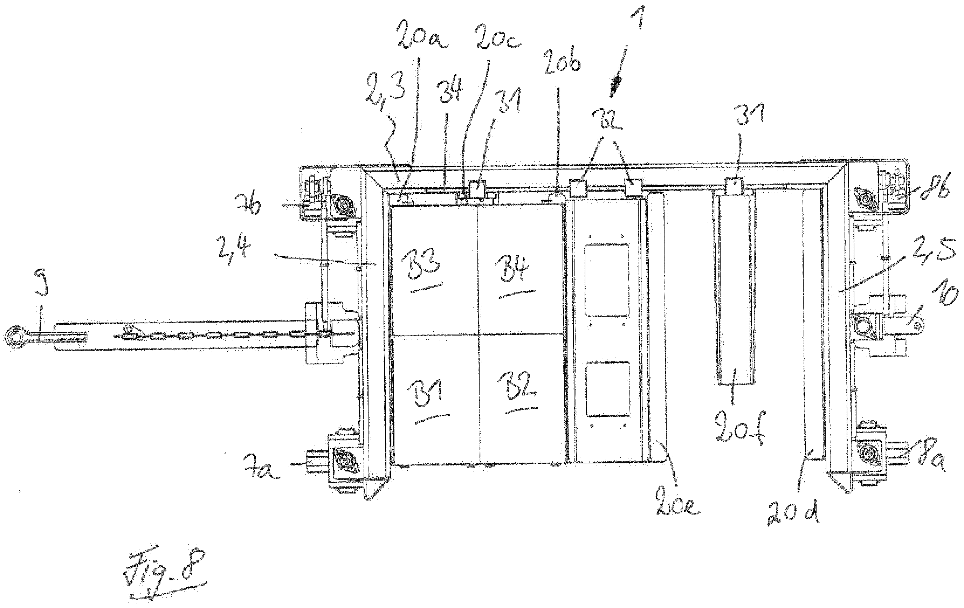

Die Figur 8 zeigt einen erfindungsgemäßen Routenzuganhänger 1 in einer Draufsicht mit einer aufgeladenen Bodenroller-Tragpalette 15 und darauf befindlichen Bodenrollern B1-B4.

Die Figur 9 zeigt einen unbeladenen erfindungsgemäßen Routenzuganhänger 1, bei dem der Tragrahmen 2 abgesenkt ist, so dass die Tragflächen 20a-20c bzw. 20d-20f auf der Fahrbahn bodengleich aufliegen.

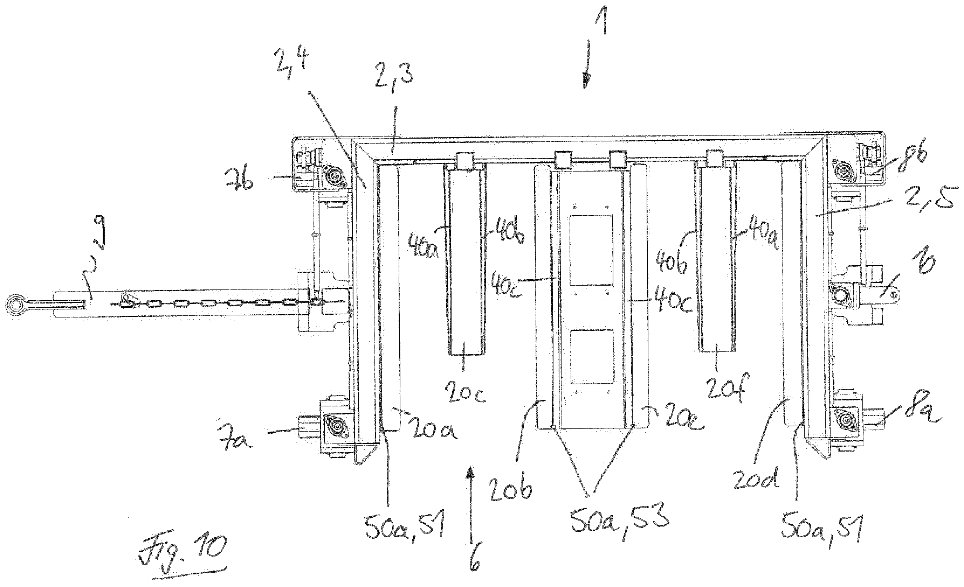

Die Figur 10 zeigt einen erfindungsgemäßen, unbeladenen Routenzuganhänger 1 in einer Draufsicht.

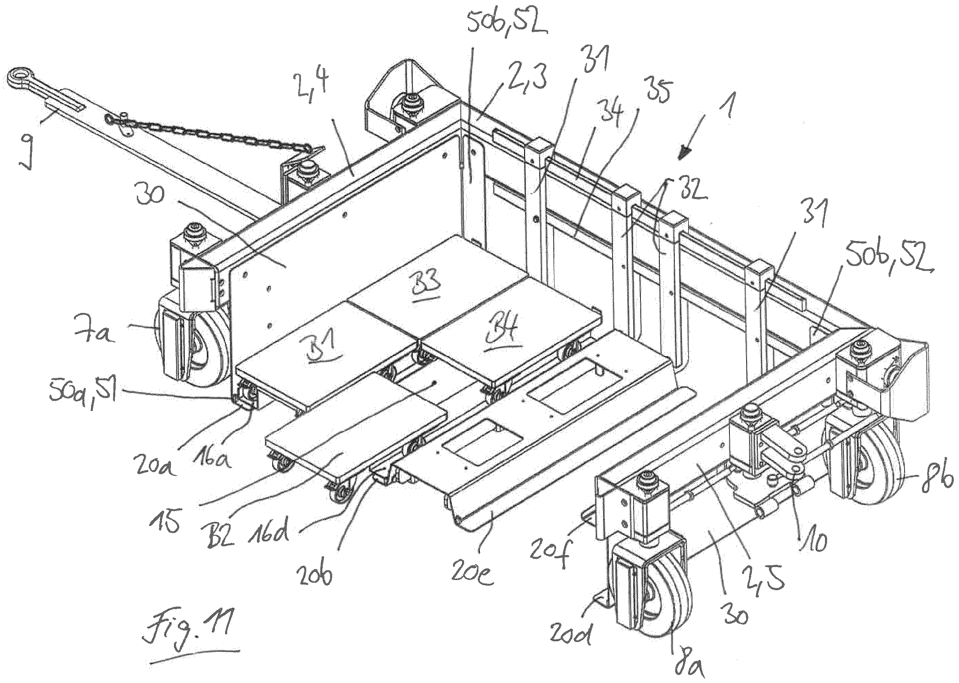

In den Figuren 11 bis 14 ist ein erfindungsgemäßer Routenzuganhänger 1 dargestellt, in den eine Bodenroller-Tragpalette 15 mit darauf befindlichen Bodenroller B1-B4 eingeladen ist. Durch Absenken des Tragrahmens 2 und somit bodengleiches Absenken der Tragflächen 20a-20c auf die Fahrbahn werden auch die unmittelbar oberhalb der Tragflächen 20a-20c befindlichen Auffahrflächen 16a, 16b, 16c, 16d der Bodenroller-Tragpalette 15 auf die Fahrbahn abgesenkt, so dass die Bodenroller B1-B4 einzeln von Hand von den Auffahrflächen 16a, 16b, 16c, 16d der Bodenroller-Tragpalette 15 auf die Fahrbahn FB heruntergeschoben und somit abgeladen werden können sowie von der Fahrbahn FB auf die Auffahrflächen 16a, 16b, 16c, 16d der Bodenroller-Tragpalette 15 hinaufgeschoben und somit aufgeladen werden können. Die Bodenroller B1-B4 können somit bei in dem Routenzuganhänger 1 befindlicher Bodenroller-Tragpalette 15 einzeln per Hand ein- bzw. ausgeladen werden, ohne dass ein weiteres Hilfsmittel erforderlich wäre.

Mit dem erfindungsgemäßen Routenzuganhänger 1 wird in einfacher und schneller Weise in einem Produktionsbetrieb eine Handhabung von auf einer Bodenroller-Tragpalette 15 befindlichen Bodenrollern B1-B4 erzielt, da die Bodenroller-Tragpalette 15 zusammen mit den darauf befindlichen Bodenrollern B1-B4 mittels eines Hubwagens 18 oder eines anderen Flurförderzeugs in den Routenzuganhänger 1 eingeladen und ausgeladen werden kann, so dass kein aufwändiges einzelnes Umladen der vollen bzw. leeren Bodenroller B1-B4 zwischen Routenzuganhänger 1 und Bodenroller-Tragpalette 15 erforderlich ist. Mit dem Routenzuganhänger 1 kann dann die Bodenroller-Tragpalette 15 mit den darauf befindlichen Bodenrollern B1-B4 in dem Produktionsbetrieb an eine gewünschte Zielposition gefahren werden und dort die Bodenroller B1-B4 einzeln von Hand ausgeladen bzw. eingeladen werden.

Der erfindungsgemäße Routenzuganhänger 1 führt zu einer einfachen Handhabung, beispielsweise mittels Muskelkraft, und einem einfachen Umlauf von mittels einer Bodenroller-Tragpalette 15 bewegten Bodenrollern B1-B4. Eine mit Bodenrollern B1-B4, die mit Lasten beladen sind, beladene Bodenroller-Tragpalette 15, die von einem Zulieferbetrieb an einen Produktionsbetrieb geliefert wird, kann mittels eines Hubwagens 18 oder eines anderen Flurförderzeugs in einen erfindungsgemäßen Routenzuganhänger 1 eingeladen werden und mit dem Routenzuganhänger 1 in die Produktionslinie gefahren werden. In der Produktionslinie können die mit einer Last beladenen Bodenroller B1-B4 einzeln von Hand entladen werden und die im Routenzuganhänger 1 mitgeführte Bodenroller-Tragpalette 15 mit leeren Bodenrollern B1-B4 beladen werden. Die mit leeren Bodenrollern B1-B4 beladene Bodenroller-Tragpalette 15 kann anschließend mit einem Hubwagens 18 oder einem anderen Flurförderzeugs von dem Routenzuganhänger 1 abgeladen werden und zum Zulieferbetrieb als Leergut zurückgeschickt werden. Die auf einer Bodenroller-Tragpalette 15 im Produktionsbetrieb angelieferten, mit einer Last beladenen Bodenroller B1-B4 müssen hierbei nicht einzeln von der Bodenroller-Tragpalette 15 auf den Routenzuganhänger 1 umgeladen werden und nach dem Umlauf im Produktionsbetrieb die leeren Bodenroller B1-B4 nicht einzeln von dem Routenzuganhänger 1 auf die Bodenroller-Tragpalette 15 umgeladen werden.

## Patentansprüche

1. Routenzuganhänger (1) für einen Routenzug mit einem Tragrahmen (2), der an einem Fahrwerk über eine Hubvorrichtung gegenüber einer Fahrbahnoberfläche (FB) anhebbar und absenkbar abgestützt ist, wobei der Tragrahmen (2) eine seitliche Ladeöffnung (6) zur Aufnahme von in die Ladeöffnung (6) quer zur Längsrichtung des Routenzuganhängers (1) ein- und ausschiebbaren Bodenrollern (B1-B4) aufweist, **dadurch gekennzeichnet, dass** der anhebbare und absenkbare Tragrahmen (2) mit Tragflächen (20a, 20b, 20c; 20d, 20e, 20f) zur Aufnahme mindestens einer Bodenroller-Tragpalette (15) versehen ist, wobei die Bodenroller-Tragpalette (15) mit mehreren Auffahrflächen (16a, 16b, 16c, 16d) zur Aufnahme mehrerer Bodenroller (B1-B4) versehen ist und wobei die Bodenroller-Tragpalette (15) zwischen den Auffahrflächen (16a, 16b, 16c, 16d) mit nach unten offenen Einfahrkanälen (17a, 17b) für Radarme eines Hubwagens (18) oder Gabelzinken eines Gabelstaplers versehen ist, wobei die Tragflächen (20a, 20b, 20c; 20d, 20e, 20f) des Tragrahmens (2) nur mit den Auffahrflächen (16a, 16b, 16c, 16d) der Bodenroller-Tragpalette (15) zusammenwirken und die Bodenroller-Tragpalette (15) nur im Bereich der Auffahrflächen (16a, 16b, 16c, 16d) der Bodenroller (B1-B4) mittels der Tragflächen (20a, 20b, 20c; 20d, 20e, 20f) von dem Tragrahmen (2) getragen wird.

2. Routenzuganhänger nach Anspruch 1, **dadurch gekennzeichnet, dass** der Tragrahmen (2) im Bereich der Einfahrkanäle (17a, 17b) der auf den Tragflächen (20a, 20b, 20c; 20d, 20e, 20f) des Tragrahmens (2) abgesetzten Bodenroller-Tragpalette (15) keine Tragflächen für die Bodenroller-Tragpalette (15) aufweist, so dass die Einfahrkanäle (17a, 17b) der Bodenroller-Tragpalette (15) nach unten offen sind und von Radarmen eines Hubwagens (18) oder Gabelzinken eines Gabelstaplers unterfahren werden können und die Bodenroller-Tragpalette (15) von einem Hubwagen (18) oder einem Gabelstapler über die Ladeöffnung (6) quer zur Längsrichtung des Routenzuganhängers (1) auf den Routenzuganhänger (1) aufgeladen oder von dem Routenzuganhänger (1) abgeladen werden kann.

3. Routenzuganhänger nach Anspruch 1 oder 2, **dadurch gekennzeichnet, dass** die Tragflächen (20a, 20b, 20c; 20d, 20e, 20f) des Tragrahmens (2) bodengleich abgesenkt werden können, so dass die Bodenroller (B1-B4) auf die Auffahrflächen (16a, 16b, 16c, 16d) der in dem Routenzuganhänger (1) befindlichen Bodenroller-Tragpalette (15) geschoben oder von den Auffahrflächen (16a, 16b, 16c, 16d) einer in dem Routenzuganhänger (1) befindlichen Bodenroller-Tragpalette (15) gezogen werden können.

4. Routenzuganhänger nach einem der Ansprüche 1 bis 3, **dadurch gekennzeichnet, dass** der Tragrahmen (2) in Draufsicht C-förmig ist und aus einem seitlichen Längsträger (3) sowie zwei rechtwinklig zu dem Längsträger (3) angeordneten Querträgern (4, 5) besteht und der Tragrahmen (2) an der dem Längsträger (3) gegenüberliegenden Seite die Ladeöffnung (6) aufweist, wobei die Tragflächen (20a, 20b, 20c; 20d, 20e, 20f) für die Bodenroller-Tragpalette (15) fest mit dem Tragrahmen (2) verbunden sind.

5. Routenzuganhänger nach einem der Ansprüche 1 bis 4, **dadurch gekennzeichnet, dass** die Bodenroller-Tragpalette (15) mit zwei parallel zueinander angeordneten Einfahrkanälen (17a, 17b) versehen ist, wobei seitlich an dem ersten Einfahrkanal (17a) eine erste Auffahrfläche (16a) und eine zweite Auffahrfläche (16b) für Bodenroller (B1, B3) und seitlich an dem zweiten Einfahrkanal (17b) eine dritte Auffahrfläche (16c) und eine vierte Auffahrfläche (16d) für Bodenroller (B2, B4) ausgebildet ist, wobei der Tragrahmen (2) mit einer ersten Tragfläche (20a; 20d) für die erste Auffahrfläche (16a), mit einer zweiten Tragfläche (20b; 20e) für die vierte Auffahrfläche (16d) und mit einer dritten Tragfläche (20c; 20f) für die zweite Auffahrfläche (16b) und die dritte Auffahrfläche (16c) versehen ist.

6. Routenzuganhänger nach einem der Ansprüche 1 bis 5, **dadurch gekennzeichnet, dass** die Tragflächen (20a, 20b, 20c; 20d, 20e, 20f) von Bodenflächenabschnitten (21a, 21b, 21c; 21d, 21e, 21f) des Tragrahmens (2) gebildet sind.

7. Routenzuganhänger nach Anspruch 5 oder 6, **dadurch gekennzeichnet, dass** die erste Tragfläche (20a; 20e) an einem der Querträger (4; 5) des Tragrahmens (2) angeordnet ist.

8. Routenzuganhänger nach einem der Ansprüche 5 bis 7, **dadurch gekennzeichnet, dass** die zweite Tragfläche (20b; 20e) und dritte Tragfläche (20c; 20f) an dem Längsträger (3) des Tragrahmens (2) angeordnet sind.

9. Routenzuganhänger nach einem der Ansprüche 1 bis 8, **dadurch gekennzeichnet, dass** die Tragflächen (20b, 20c; 20e, 20f) mit geneigten Führungsschrägen (40a, 40b, 40c) versehen sind, die die Bodenroller-Tragpalette (15) in Längsrichtung des Routenzuganhängers (1) führen oder sichern.

10. Routenzuganhänger nach einem der Ansprüche 1 bis 9, **dadurch gekennzeichnet, dass** der Routenzuganhänger (1) mit Anschlagelemente (50a; 50b) versehen ist, die die Bodenroller-Tragpalette (15) in Querrichtung des Routenzuganhängers (1) sichern.

11. Routenzuganhänger nach einem der Ansprüche 1 bis 10, **dadurch gekennzeichnet, dass** die Bodenroller (B1-B4) als Halb-Paletten-Bodenroller oder Viertel-Paletten-Bodenroller ausgebildet sind.

12. Routenzuganhänger nach einem der Ansprüche 1 bis 11, **dadurch gekennzeichnet, dass** der Tragrahmen (2) eine Bodenroller-Tragpaletten (15) oder mehrere Bodenroller-Tragpaletten (15) aufnehmen kann und mit Tragflächen (20a, 20b, 20c; 20d, 20e, 20f) für eine Bodenroller-Tragpaletten (15) oder mehrere Bodenroller-Tragpaletten (15) versehen ist.
